# EUROPEAN PATENT APPLICATION

(11) **EP 4 708 489 A1**
(43) Date of publication of application: **11.03.2026**
(21) Application number: 25735435.7
(22) Date of filing: 26.02.2025
(51) Int. Cl.: H01M 50/186, H01M 50/109

(54) **BUTTON CELL**

(30) Priority: 22.07.2024 CN 202421741017 U
(71) Applicant: Eve Energy Co., Ltd., Huizhou, Guangdong 516006 (CN)
(72) Inventor: YU, Fuchen, Huizhou Guangdong 516006 (CN); ZHANG, Hong, Huizhou Guangdong 516006 (CN); SUN, Peiling, Huizhou Guangdong 516006 (CN); ZHANG, Lixing, Huizhou Guangdong 516006 (CN); CAO, Lang, Huizhou Guangdong 516006 (CN)
(74) Representative: Berggren Oy
(86) International application number: PCT/CN2025/079242
(87) International publication number: WO 2026/020811

(57) **Abstract**

The present application provides a button battery. The button battery comprises: a first substrate, a first annular wall, and a sealing member. The first annular wall is arranged around a periphery of the first substrate and forms an accommodating cavity with the first substrate, and at least a part of the sealing member is located on a side, away from the accommodating cavity, of the first annular wall. A second housing includes a second substrate and a second annular wall. The second substrate is configured to cover and seal the accommodating cavity, and the second annular wall is connected to a periphery of the second substrate.

## Description

The present Application claims priority to Chinese Application No. 202421741017.8, filed to China National Intellectual Property Administration on July 22, 2024, the content of which is incorporated herein by reference in its entirety.

### TECHNICAL FIELD

The present application relates to the field of battery technology, and in particular to a button battery.

### BACKGROUND

Button batteries, also known as button cells, are usually large in diameter and thin in thickness. A button battery usually includes a positive electrode cover and a negative electrode cover. During the assembly of a button battery, the positive electrode cover needs to be assembled to the negative electrode cover.

In related technologies, assembly pressure is generated during the assembly process of the button battery.

### SUMMARY

In case that the assembly pressure is excessive, the negative electrode cover would be bent, affecting the performance and service life of the battery.

The present application provides a button battery. The button battery includes: a first housing assembly, including a first substrate, a first annular wall, and a sealing member; in which the first annular wall is arranged around a periphery of the first substrate and forms an accommodating cavity with the first substrate; and at least a part of the sealing member is located at a side, facing away from the accommodating cavity, of the first annular wall; and
a second housing, including a second substrate and a second annular wall; in which the second substrate is arranged to cover and seal the accommodating cavity; a first end of the second annular wall is connected to a periphery of the second substrate, a second end of the second annular wall extends along a side facing away from the second substrate; and the second annular wall is configured to form a sealing structure with the sealing member and the first annular wall;
in which, the sealing member includes a first end located on a side, facing away from the accommodating cavity, of the first annular wall and arranged close to the first substrate; a first inclined face is arranged at the first end, the first inclined face is inclined relative to the first annular wall; and a lapping end is abutted against the first inclined face.

### BENEFICIAL EFFECTS

In the button battery provided in the present application, during the assembly of the first housing assembly with the second assembly, since a first inclined face is arranged, and the first inclined face is inclined relative to the first annular wall, according to the principle of force distribution in dynamics of theoretical mechanics, a horizontal compressive force is effectively reduced through the inclined face at a certain angle, and the force is concentrated in a vertical direction, thereby avoiding bending of the first substrate of the first housing assembly, and meanwhile improving sealing effect, so that the sealing performance of the button battery is ensured, the evaporation of electrolyte in the button battery is suppressed, and the performance and service life of the battery are improved.

### BRIEF DESCRIPTION OF THE DRAWINGS

FIG. 1 is a schematic diagram of a structure of a button battery provided in a possible embodiment of the present application.
FIG. 2 is a cross sectional view of the button battery shown in FIG. 1 provided in a possible embodiment.
FIG. 3 is a schematic diagram of a structure of a part of the button battery shown in FIG. 2.
FIG. 4 is a schematic diagram of a structure of a part of the button battery shown in FIG. 2.
FIG. 5 is a schematic diagram of a structure of the button battery shown in FIG. 3 with a second housing removed.
FIG. 6 is a partially enlarged schematic diagram of part A in FIG. 5.
FIG. 7 is a schematic diagram of a structure of the button battery shown in FIG. 1 provided in another possible embodiment of the present application.
FIG. 8 is a partially enlarged schematic diagram of part B in FIG. 7.

Reference numerals in the accompany drawings:
10: first housing assembly; 11: first substrate; 12: accommodating cavity; 13: first annular wall; 15: sealing member; 154: second sealing portion; 152: first sealing portion;
1541: first end; 151: second inclined face; 1511: first end of the first inclined face; 1513: second end of the first inclined face;
153: first inclined face; 156: first top face; 158: second top face;
30: second housing; 31: second substrate; 33: second annular wall; 331: lapping end;
60: negative electrode; 70: positive electrode; 80: separator.

### DETAILED DESCRIPTION

In the description of the present application, unless otherwise clearly specified and limited, the terms "connected to", "connected", and "fixed" should be understood in a broad sense, for example, it can be a fixed connection, a detachable connection, or an integral connection; it can be a mechanical connection or an electrical connection; it can be a direct connection or an indirect connection through an intermediate medium; and it can be an internal connection of two elements or an interaction relationship between two elements. For ordinary technicians in this field, the specific meanings of the above terms in the present application can be understood according to the specific circumstances.

In the present application, unless otherwise clearly specified and limited, a first feature being "on" or "under" a second feature may include the first and second features being in direct contact, or may include the first and second features being in contact not directly but through another feature between them. Moreover, a first feature being "on", "up of" and "above" a second feature includes the first feature being directly above and obliquely above the second feature, and the first feature having a higher horizontal height than the second feature. A first feature being "under", "down of" and "below" a second feature includes the first feature being directly below and obliquely below the second feature, and the first feature having a lower horizontal height than the second feature.

In the description of this embodiment, the terms "upper", "lower", "left", "right", "front", "rear" and other directions or positional relationships are based on the directions or positional relationships shown in the accompanying drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

The embodiments of the present application provide a button battery, which is described below in combination with the accompanying drawings.

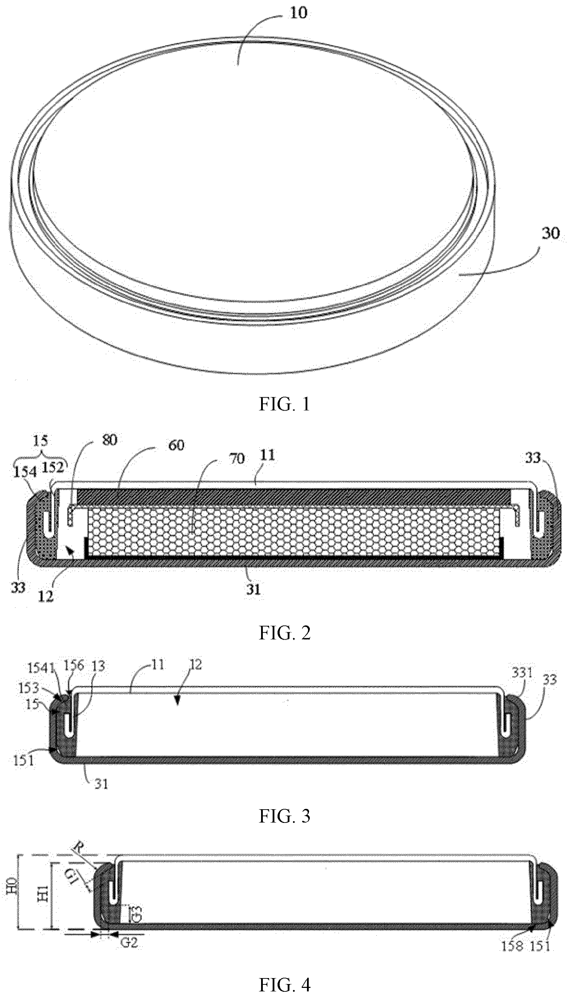

A button battery is provided in the embodiments of the present application. Please refer to FIG. 1. The button battery includes a first housing assembly 10 and a second housing 30. Please refer to FIG. 2 and FIG. 3. The first housing assembly 10 includes a first substrate 11, a first annular wall 13, and a sealing member 15. The first annular wall 13 is arranged around a periphery of the first substrate 11 and forms an accommodating cavity 12 with the first substrate 11. The material of the sealing member 15 is elastic, for example, soft rubber, such as rubber and silicone, or is plastic, such as polypropylene PP8830, polypropylene DX-23, DX-231, a type of polytetrafluoroethylene, or other elastic fiber materials. The second housing 30 is formed into an expected shape by an integrated stamping process.

In some specific embodiments, the first annular wall 13 is arranged perpendicular to a plane where the first substrate 11 is located, and the plane where the first substrate 11 is located is a horizontal plane. In other specific embodiments, the first annular wall 13 is arranged non-perpendicular to the plane where the first substrate 11 is located.

The first annular wall 13 is integrally formed with the first substrate 11, for example, a metal plate is stamped to form the first annular wall 13 and the first substrate 11. In other specific embodiments, the first annular wall 13 is connected to the first substrate 11 by welding or other methods.

Please refer to FIG. 2. At least a part of the sealing member 15 is arranged on an outer peripheral side of the first annular wall 13, and the outer peripheral side of the first annular wall 13 is specifically a side, facing away from the accommodating cavity, of the first annular wall, thereby achieving a good sealing effect. Specifically, the sealing member 15 includes a first sealing portion 152 and a second sealing portion 154 connected to each other, the first sealing portion 152 is arranged in the accommodating cavity 12, and the second sealing portion 154 is arranged on a side, facing away from the accommodating cavity 12, of the first annular wall 13. Thus, during an assembly process, the sealing member 15 is not easily moved, and the sealing effect is good.

Please refer to FIG. 3. The second housing 30 includes a second substrate 31 and a second annular wall 33. The second substrate 31 is configured to cover and seal the accommodating cavity 12. After the second housing 30 is assembled to the first housing assembly 10, the second annular wall 33 is located on the outer peripheral side of the first annular wall 13. Due to factors such as machining accuracy and cost, there is a gap between an inner wall face of the second annular wall 33 and an outer wall face of the first annular wall 13. The sealing member 15 is configured to be at least partially located between the first annular wall 13 and the second annular wall 33, so as to seal the gap between the inner wall face of the second annular wall 33 and the outer wall face of the first annular wall 13, thereby preventing external water vapor and dust from entering the interior of the button battery and affecting the performance of the button battery.

Please refer to FIG. 3. In some embodiments, the second annular wall 33 is connected to a periphery of the second substrate 31, and a lapping end 331 of the second annular wall 33 extends along a side facing away from the second substrate 31, and the second annular wall is configured to form a sealing structure with the sealing member 15 and the first annular wall 13. In some specific embodiments, the second annular wall 33 is arranged perpendicular to a plane where the second substrate 31 is located, and the plane where the second substrate 31 is located is a horizontal plane. In other specific embodiments, the second annular wall 33 is arranged not perpendicular to the plane where the second substrate 31 is located.

Please refer to FIG. 3. The second sealing portion 154 includes a first end 1541 close to the first substrate 11, and the first end 1541 is located at a side, facing away from the accommodating cavity, of the first annular wall 13, and is arranged close to the first substrate 11. A first inclined face 153 is arranged at the first end 1541, the first inclined face 153 is inclined relative to the first annular wall 13, and abutted against the second housing 30. Specifically, the lapping end 331 of the second annular wall 33 is abutted against the first inclined face 153.

In the embodiments of the present application, during the assembly of the first housing assembly 10 with the second housing 30, the first inclined face 153 distributes assembly pressure during a sealing process of the battery to avoid bending of the first substrate 11 of the first housing assembly 10. Meanwhile, an arrangement of the first inclined face 153 improves a compression rate and balance of the sealing member 15, thereby achieving a good sealing effect, ensuring the sealing performance of the button battery, and suppressing the evaporation of electrolyte in the button battery, and thereby improving the performance and service life of the battery.

According to actual needs, the inclined face at the first end 1541 includes an outer side inclined face, an inner side inclined face, an outer side R angle (fillet), etc.

In some specific embodiments, the inclined face at the first end 1541 is configured as an outer side inclined face structure. As shown in FIG. 2 to FIG. 6, the inclined face (that is, the first inclined face 153) at the first end 1541 is configured as an outer side inclined face structure. An angle a2 between the first inclined face 153 and the plane where the second substrate 31 is located is 32° ~ 40°. In case that the angle is in a range of 32° ~ 40°, the assembly force is effectively distributed in a sealing process of a battery cell assembly. In addition, the outer side inclined face structure guides the second housing 30, so that the assembly of the second housing 30 with the first housing assembly 10 is smooth and accurate during a packaging process. An inner side of the second housing 30 continuously and tightly fits with the sealing member 15 to avoid deviation in assembly and ensure positional accuracy. The angle a2 between the first inclined face 153 and the plane where the second substrate 31 is located can be 32°, 33°, 34°, 35°, 36°, 37°, 38°, 39°, or 40°.

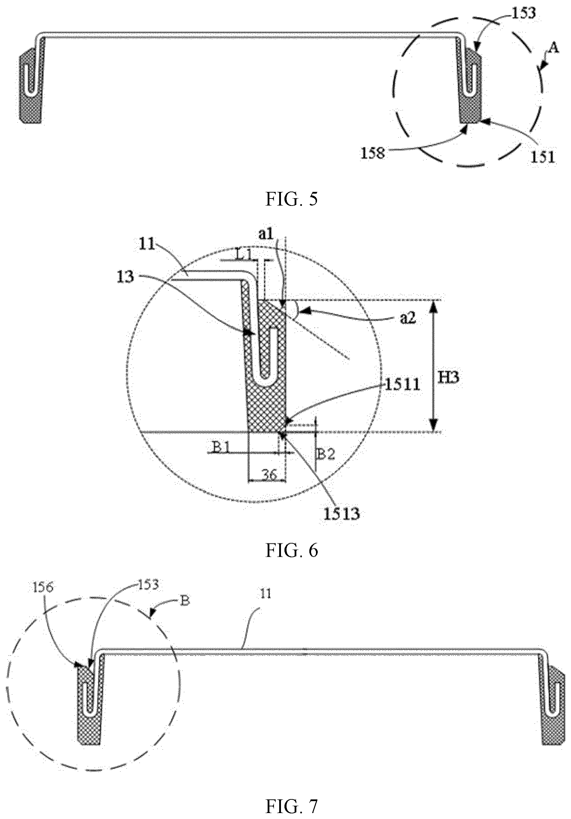

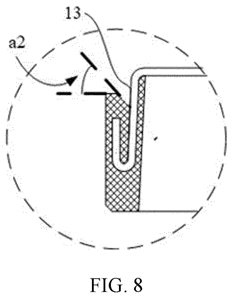

In some specific embodiments, such as FIG. 7 and FIG. 8, the inclined face (that is, the first inclined face 153) at the first end 1541 is configured as an inner side inclined face structure. In case that an end, facing away from the second housing 30, of the sealing member 15 is configured as the inner side inclined face, an inner side bevel angle (an angle a2 between the first bevel 153 and the plane where the second substrate 31 is located) is in a range of 20° ~ 40°, for example, the inner side bevel angle can be 20°, 25°, 26°, 27°, 28°, 29, 30°, 33°, 34°, 35°, 36°, 37°, 38°, 39°, or 40°.

In some specific embodiments, the inclined face (that is, the first inclined face 153) at the first end 154 is configured as an outer side R fillet structure, and a value of R (or radius) of the outer side R fillet is 0.2 mm - 0.8 mm, in particular 0.3 mm - 0.8 mm, for example, the value of R can be 0.3 mm, 0.4 mm, 0.5 mm, 0.6 mm, 0.7 mm, or 0.8 mm.

In the embodiments of the present application, the inclined face at the first end 1541 is configured as an outer side inclined face structure, so that the first substrate 11 is small in bending degree and achieves a good assembly force distribution effect during the assembly process.

It is easy to understand that in the embodiments of the present application, during the assembly of the second housing 30 (or referred to as a positive electrode cover) with the first housing assembly 10 (or referred to as an integrated negative electrode cover), the first inclined face distributes the assembly force, and during the assembly process, an axial direction of the sealing member 15 is always kept coincided with an axial direction of the second housing 30 (or referred to as the positive electrode cover), so that the sealing member 15 is centered in the second housing 30, avoiding deviation of the sealing member 15 in the packaged button battery , thereby always maintaining a large contact area between the positive electrode and the second housing 30, and a good performance of the button battery. A balanced pressure is applied by the second housing 30 around the sealing member 15, so that the sealing member 15 are uniformly compressed from all sides, and the compression rate and balanced performance of the sealing member 15 are improved, thereby improving the sealing performance, making the sealing of the button battery good and not easy to leakage, thereby effectively suppressing the evaporation of the electrolyte and preventing external moisture from entering. Due to the balanced pressure applied by the sealing member 15 around the sealing member 15, the balanced pressure is applied by the sealing member 15 around the first annular wall 13, so that bending of the first substrate 11 of the first housing assembly 10 is effectively avoided. Due to the assembly force generated during the sealing process coming from the horizontal compressive force of a mold during a descending process of the assembled battery cell, according to the principle of force distribution in dynamics of theoretical mechanics, the horizontal compressive force is effectively reduced through the inclined face at a certain angle, so that the horizontal force on the first substrate 11 of the first housing assembly 10 is reduced and the force is concentrated in the vertical direction to avoid bending.

Please refer to FIG. 3. In some specific embodiments, the first end 1541 further includes a first top face 156. The first top face 156 is adjacent to the first annular wall 13, and the first inclined face 153 is connected to an end, facing away from the first annular wall 13, of the first top face 156. That is, in this embodiment, the first top face 156 is located between the first annular wall 13 and the first inclined face 153, and the first inclined face 153 is arranged on an outer side of the first end 1541, that is, on a side close to the second annular wall 33.

Specifically, the first inclined face 153 is inclined from the first top face 156 in a direction away from the first annular wall 13 and away from the first substrate 11, and the first inclined face 153 is in contact with the second annular wall 33.

Please refer to FIG. 5 and FIG. 6. A value of an angle between the first inclined face 153 and a plane where the first annular wall 13 is located is a1, and a value of an angle between the first inclined face 153 and the plane where the second substrate 31 is located is a2, and a1 is different from a2. As such, the first inclined face 153 is of an asymmetric inclined face structure, so that the sealing of the button battery is improved.

Please refer to FIG. 5 and FIG. 6. A value L1 of a distance between an end, close to the first substrate 11, of the first inclined face 153 and the first annular wall 13 is in a range of 0.18 mm to 0.23 mm. In some embodiments, the value a2 of the angle between the first inclined face 153 and the plane where the second substrate 31 is located is in a range of 20° to 40°. As such, the pressure on the first housing assembly 10 during the assembly process is effectively distributed, the pressure on the first substrate 11 is reduced, the compression rate of the sealing member is increased, and the sealing performance is improved. It is easy to understand that in case that the first top face 156 is a horizontal plane, L1 is a length of the first top face 156. In other embodiments, the value a2 of the angle between the first inclined face 153 and the plane where the second substrate 31 is located is 30°, or the value a2 is 45°.

Please refer to FIG. 7. In some specific embodiments, the first end 1541 further includes a first top face 156. The first inclined face 153 is adjacent to the first annular wall 13, and the first top face 156 is connected to an end, away from the first annular wall, of the first inclined face 153. That is, the difference between this embodiment and the previous specific embodiment lies in that in this embodiment, the first inclined face 153 is located between the first annular wall 13 and the first top face 156, and the first inclined face 153 is located on an inner side of the first end 1541, that is, on a side close to the first annular wall 13. The first inclined face is inclined from the first top face in a direction towards the first annular wall and the second substrate.

Please refer to FIG. 3, FIG. 5, and FIG. 7. In some embodiments, a second inclined face 151 and a second top face 158 are formed at an end, facing away from the first substrate 11, of the sealing member 15. The second top face 158 is configured to be abutted against the second substrate 31. The second inclined face 151 is connected to an end, facing away from the first annular wall 13, of the second top face, and is inclined from the second top face in a direction towards the second annular wall and the first substrate 11. During the assembly of the second housing 30 with the first housing assembly 10, the assembly is performed by stamping. The second inclined face 151 guides the second housing 30, so that the assembly of the second housing 30 with the first housing assembly 10 is smooth and accurate.

Please refer to FIG. 5 and FIG. 6. In some embodiments, the first inclined face 153 includes a first end 1511, close to the first substrate 11, of the first inclined face and a second end 1513, close to the second substrate 31, of the first inclined face. In the horizontal direction, a distance between the first end 1511 of the first inclined face and the second end 1513 of the first inclined face is B1. In the vertical direction, a distance between the first end 1511 of the first inclined face and the second end 1513 of the first inclined face is B2. A ratio of B1 to B2 is greater than or equal to 0.5, and the ratio of B1 to B2 is less than or equal to 2.5. For example, the ratio of B1 to B2 can be 0.5, 0.6, 0.7, 0.8, 0.9, 1.0, 1.1, 1.2, 1.3, 1.4, 1.5, 1.6, 1.8, 1.9, 2.0, 2.1, 2.2, 2.3, 2.4, or 2.5. In particular, the ratio of B1 to B2 is in a range of 0.5 to 1.5, for example, the ratio of B1 to B2 can be 0.5, 0.6, 0.7, 0.8, 0.9, 1.0, 1.1, 1.2, 1.3, 1.4, or 1.5. As such, the assembly difficulty is reduced, and the manufacturing feasibility and assembly efficiency are improved.

In some embodiments, the sealing member is configured as a sealing ring, and the first inclined face is arranged around a periphery of the sealing ring. As such, the inclined faces around the sealing ring guide the second housing 30, and the guiding effect is improved.

Please refer to FIG. 2 and FIG. 5. In some embodiments, the button battery further includes a negative electrode 60, a positive electrode 70, and a separator 80 arranged in the accommodating cavity 12, the negative electrode 60 is arranged close to the first substrate 11, the positive electrode 70 is arranged close to the second substrate 31, and the separator 80 is arranged between the positive electrode 70 and the negative electrode 60.

The first substrate 11, the first annular wall 13, and the sealing member 15 are processed to form an integrated first housing assembly 10, and the sealing member 15 is injection molded on the first substrate 11 and the first annular wall 13. During assembly, the negative electrode 60 needs to be placed in the accommodating cavity 12, and the separator 80 and the positive electrode 70 are placed in sequence on a side, facing away from the first substrate 11, of the negative electrode, so that the separator 80 is located between the negative electrode 60 and the positive electrode 70, achieving the effect of isolating the negative electrode 60 from the positive electrode 70. Then, the electrolyte needs to be injected, and the second housing 30 is covered on the first housing assembly 10. Finally, sealing is performed to form a button battery. After the assembly, pre-discharge aging is needed to be performed on the button battery.

Please refer to FIG. 6. In some embodiments, the first substrate 11, the first annular wall 13, and the sealing member 15 are integrally formed. In order to improve the sealing effect, in some embodiments, the sealing member 15, the first substrate 11, and the first annular wall 13 are processed by injection molding, and a part of the structure of the mold required for injection molding is designed with a specific angled face structure, which is configured to ensure that an asymmetric plane structure with a specific included angle is formed between an outer side of the formed first housing assembly, that is, the sealing member 15, and a direction of a top horizontal plane.

In these embodiments, the first substrate 11, the first annular wall 13, and the sealing member 15 are configured as an integrally formed structure. At this time, the first substrate 11, the first annular wall 13, and the sealing member 15 are deformed together when subjected to force, and a gap is not easily generated among the first substrate 11, the first annular wall 13, and the sealing member 15. In addition, the assembly process of the sealing member 15 and the first housing assembly 10 is simplified, and the sealing performance of the sealing member 15 and the first housing assembly 10 is improved, thereby improving production efficiency. The sealing performance of the integrally formed sealing member 15 to the first substrate 11 and the first annular wall 13 is improved.

In some embodiments, a material of the sealing member 15 is selected from one of polypropylene and polytetrafluoroethylene.

Please refer to FIG. 4. For the convenience of description, an average thickness of the plate of the second housing 30 is set as T. In some embodiments, since the second substrate 31 and the second annular wall 33 are formed by stamping or other methods from a single plate , the average thickness of the plate of the second substrate 31 is configured as T.

A shortest distance between the first annular wall 13 and the second annular wall 33 (that is, a shortest distance of a gap between the side walls) is G2, an average thickness of the second substrate 31 is T, and a ratio of G2 to T is 60% - 200%. For example, the ratio of G2 to T can be 60%, 70%, 80%, 90%, 100%, 110%, 120%, 130%, 140%, 150%, 160%, 170%, 180%, 190%, or 200%.

A shortest distance between the first annular wall 13 and the second substrate 31 (that is, a shortest distance of a gap between the bottoms) is G3, an average thickness of the second substrate 31 is T, and a ratio of G3 to T is 340% - 560%. For example, the ratio of G3 to T can be 340%, 360%, 380%, 400%, 420%, 440%, 460%, 480%, 500%, 520%, 540%, or 560%.

A shortest distance G1 of a gap between a mouth of the first housing assembly 10 and the second housing 30 of the button battery to the average thickness T of the plate of the second housing is 80% - 120%.

Please refer to FIG. 4. The shortest distance G1 of the gap between the mouth of the first housing assembly 10 and the second housing 30 of the button battery is in a range of 0.2 mm to 0.35 mm. Specifically, the shortest distance G1 can be 0.2 mm, 0.23 mm, 0.25 mm, 0.3 mm, or 0.35 mm.

Please refer to FIG. 4. The shortest distance G2 of the gap between the side walls is in a range of 0.15 mm to 0.45 mm, in particular, the shortest distance G2 can be 0.15 mm, 0.2 mm, 0.25 mm, 0.3 mm, 0.35 mm, 0.4 mm, or 0.45 mm. The shortest distance G3 of the gap between the bottoms is in a range of 0.85 mm to 1.3 mm, in particular, the shortest distance G3 can be 0.85 mm, 0.9 mm, 0.95 mm, 1.0 mm, 1.05 mm, 1.1 mm, 1.25 mm, or 1.3 mm.

Please refer to FIG. 4. A curvature radius R of the sealed second housing 30 is in a range of 0.8 mm to 1.2 mm, in particular, 0.9 mm to 1.1 mm. Particularly, the R curvature radius can be 0.9 mm, 0.95 mm, 1.0 mm, 1.05 mm, or 1.1 mm.

Please refer to FIG. 4 and FIG. 6. A height H3 of a side wall of the sealing member 15 to an average height H0 of a finished battery cell is 100% - 106%. The height H3 of the side wall of the sealing member 15 mentioned here is a height of the sealing member 15 in an uncompressed state, that is, in an unfolded state. As such, the close fit between the assembled first housing assembly 10 and the second housing 30 is enhanced, which effectively prevents the evaporation of the electrolyte, and prevents external moisture from entering, thereby improving the sealing performance of the battery cell.

In the embodiments of the present application, the first inclined face is arranged, the horizontal pressure force is effectively reduced, so that a horizontal force applied on the first substrate 11 of the first housing assembly 10 is reduced, the force is concentrated in a vertical direction, and bending is avoided. The first inclined face includes an outer side inclined face. In order to improve the sealing effect, an angle a2 between the first inclined face 153 and the plane where the second substrate 31 is located is 30°.

Specifically, the material of the sealing member 15 is selected as polypropylene PP8830, the shortest distance of the gap between the mouth of the first housing assembly 10 and the second housing 30 of the button battery is G1=0.23mm, the shortest distance of the gap between the side walls is G2 = 0.30 mm, the shortest distance of the gap between the bottoms is G3 = 1.2 mm, and the curvature radius of the sealed second housing 30 is R=1.1 mm. An outer side bevel angle a2 of a top end of the sealing member 15 is 30°.

It has been verified through experiments that in case that a2 is 30°, the evaporation of the electrolyte is reduced, thereby improving the sealing performance of the battery. In addition, a poor internal contact caused by the outward bulging of the steel housing under high temperature environments is effectively prevented. Therefore, the characteristics of the battery are not easily degraded, and the electrical performance of the battery is more stable.

Button batteries, also known as button cells are usually larger in diameter and thin in thickness. A button battery usually includes a positive electrode cover and a negative electrode cover. During the assembly of a button battery, the positive electrode cover needs to be assembled to the negative electrode cover, which also involves a sealing process of the battery. During the installation of the positive electrode cover to the negative electrode cover, the positive electrode cover needs to be pressed down in a direction towards the negative electrode cover, and a large assembly pressure would be applied on the negative electrode cover and the sealing ring. In case that the assembly pressure is excessive, the negative electrode cover would be bent, affecting the performance and service life of the battery.

The stamping force and forming force generated during the sealing process cause a significant impact on the negative electrode cover. As a result, the negative electrode cover is deformed, so that a gap is formed between the negative electrode cover and the sealing ring on the one hand, and a gap is formed between the negative electrode cover and the positive electrode cover on the other hand, both of which affect the sealing performance of the battery cell. Specifically, the sealing process of the battery specifically includes a stamping process and a sealing process. The stamping process specifically refers to a process of placing a combination of the negative electrode cover and the positive electrode cover in a sealing mold, and forming a battery cell by mechanical stamping. During the sealing process, stamping pressure is generated by mechanical stamping, and the stamping pressure is transmitted to the negative electrode cover, so that a stamping force is applied on the negative electrode cover by an upper sealing mold. The sealing process specifically refers to a process of mounting the positive electrode cover on the negative electrode cover, sealing the upper mold, and shrinking an end, facing the negative electrode cover, of the positive electrode cover and an end of the negative electrode cover. In the sealing process, pressure forming force needs to be applied on the end of the negative electrode cover by the mold to shrink the end of the negative electrode cover, so that a forming force of the mold is applied on the negative electrode cover. Since in the sealing process of the button battery, the end, facing the negative electrode cover, of the positive electrode cover needs to be shrunk, the positive electrode cover is bent and deformed in the mold, and a rubber ring is deformed with the positive electrode cover and pressed on the negative electrode cover, so that a large pressure is applied on the annular wall of the negative electrode cover. The negative electrode cover is easily deformed, so that gaps are formed between the negative electrode cover and the sealing ring and the positive electrode cover, as well as between the negative electrode cover and the sealing ring, affecting the sealing performance of the button battery.

In a first aspect, in the embodiments of the present application, a first inclined face is arranged on a side, facing the first substrate 11, of the sealing member 15. The first inclined face 153 distributes the assembly pressure during the battery sealing process, so that the impact force generated during assembly is reduced, and the bending of the first substrate 11 of the first housing assembly 10 is avoided. Meanwhile, the first inclined face 153 is arranged, so that the compression rate and balance of the sealing member 15 are improved, thereby achieving a good sealing effect, ensuring the sealing performance of the button battery, suppressing the evaporation of electrolyte in the button battery, and improving the performance and service life of the battery.

In a second aspect, based on the first aspect, a first inclined face 153 is arranged around a peripheral side of the sealing member, so that an inner side of the second housing 30 continuously and tightly fits with the first housing assembly 10, thereby avoiding deviation in assembly and ensuring positional accuracy.

In a third aspect, the first substrate 11, the first annular wall 13, and the sealing member 15 are integrally formed. In the embodiments of the present application, the first housing assembly 10 includes the first substrate 11, the first annular wall 13 and the sealing member 15. The first substrate 11, the first annular wall 13, and the sealing member 15 are formed as an integrated structure, so that the first substrate 11, the first annular wall 13, and the sealing member 15 are deformed together when subjected to force, and a gap is not easily formed between the first annular wall 13 and the sealing ring. In addition, the effects of simplifying the assembly process of the first substrate 11, the first annular wall 13 and the sealing member 15, improving the sealing performance of the first substrate 11, the first annular wall 13 and the sealing member 15 are achieved, thereby improving production efficiency.

In a fourth aspect, in the embodiments of the present application, a second inclined face 151 is arranged at an end, facing away from the first substrate 11, of the sealing member. The second inclined face 151 plays a role in guiding to guide the second housing 30, so that the second housing 30 is smoothly and accurately assembled to the first housing assembly 10.

In a fifth aspect, the first substrate 11, the first annular wall 13, and the sealing member 15 are formed as an integrated structure, and a first inclined face is arranged on the sealing member 15. Meanwhile, during the assembly of the second housing 30 with the first housing assembly 10, the first inclined face distributes the assembly pressure during the sealing process of the battery, so that the bending of the first substrate 11 of the first housing assembly 10 is avoided, the compression rate and balance of the sealing member 15 between the sealing member 15 and the second housing 30 are improved, the evaporation of the electrolyte is suppressed, and the sealing performance of the button battery is ensured.

## Claims

1. A button battery, comprising:
a first housing assembly (10), comprising a first substrate (11), a first annular wall (13), and a sealing member (15); the first annular wall (13) being arranged around a periphery of the first substrate (11) and forming an accommodating cavity (12) with the first substrate (11); and at least a part of the sealing member (15) being located at a side, facing away from the accommodating cavity (12), of the first annular wall (13); and
a second housing (30), comprising a second substrate (31) and a second annular wall (33); the second annular wall (33) being connected to a periphery of the second substrate (31); the second annular wall (33) comprising a lapping end (331), and the lapping end (331) extending along a side facing away from the second substrate (31), and being configured to form a sealing structure with the sealing member (15) and the first annular wall (13);
wherein, the sealing member (15) comprises a first end (1541), the first end (1541) is located on a side, facing away from the accommodating cavity (12), of the first annular wall (13), and is arranged close to the first substrate (11); a first inclined face (153) is arranged at the first end (1541), the first inclined face (153) is inclined relative to the first annular wall (13); and the lapping end (331) is abutted against the first inclined face (153).

2. The button battery of claim 1, wherein
the first end (1541) further comprises a first top face (156), the first top face (156) is adjacent to the first annular wall (13); the first inclined face (153) is connected to an end, facing away from the first annular wall (13), of the first top face (156), and is inclined from the first top face (156) in a direction away from the first annular wall (13) and away from the first substrate (11); and the first inclined face (153) is in contact with the second annular wall (33).

3. The button battery of claim 2, wherein a value of an angle between the first inclined face (153) and a plane where the first annular wall (13) is located is a1; and a value of an angle between the first inclined face (153) and a plane where the second substrate (31) is located is a2; and a1 is different from a2.

4. The button battery of claim 3, wherein a value L1 of a distance between an end, close to the first substrate (11), of the first inclined face (153) and the first annular wall (13) is in a range of 0.18 mm to 0.23 mm; and a value a2 of the angle between the first inclined face (153) and the plane where the second substrate (31) is located is in a range of 20° to 40°.

5. The button battery of claim 1, wherein the first end (1541) further comprises a first top face (156); the first inclined face (153) is adjacent to the first annular wall (13); the first top face (156) is connected to an end, away from the first annular wall (13), of the first inclined face (153); the first inclined face (153) is inclined from the first top face (156) in a direction towards the first annular wall (13) and towards the second substrate (31).

6. The button battery of any one of claims 1 to 5, wherein a second inclined face (151) and a second top face (158) are formed at an end, facing away from the first substrate (11), of the sealing member (15); the second top face (158) is configured to be abutted against the second substrate (31); and the second inclined face (151) is connected to an end, facing away from the first annular wall (13), of the second top face (158), and is inclined from the second top face (158) in a direction towards the second annular wall (33) and towards the first substrate (11).

7. The button battery of claim 6, wherein the first inclined face (153) comprises a first end (1511) of the first inclined face and a second end (1513) of the first inclined face; the first end (1511) of the first inclined face (153) is close to the first substrate (11), and the second end (1513) of the first inclined face is close to the second substrate (31); and in a horizontal direction, a distance between the first end (1511) of the first inclined face and the second end (1513) of the first inclined face is B1; in a vertical direction, a distance between the first end (1511) of the first inclined face and the second end (1513) of the first inclined face is B2; a ratio of B1 to B2 is greater than or equal to 0.5, and the ratio of B1 to B2 is less than or equal to 2.5.

8. The button battery of any one of claims 1 to 5, wherein the sealing member (15) is configured as a sealing ring; and the first inclined face (153) is arranged around a periphery of the sealing ring.

9. The button battery of any one of claims 1 to 5, wherein the sealing member (15) is injection molded on the first substrate (11) and the first annular wall (13).

10. The button battery of any one of claims 1 to 5, wherein the button battery further comprises a negative electrode (60), a positive electrode (70), and a separator (80) arranged in the accommodating cavity (12); the negative electrode (60) is arranged close to the first substrate (11); the positive electrode (70) is arranged close to the second substrate (31); and the separator (80) is arranged between the positive electrode (70) and the negative electrode (60).

11. The button battery of any one of claims 1 to 5, wherein a material of the sealing member (15) is selected from one of polypropylene and polytetrafluoroethylene.

12. The button battery of any one of claims 1 to 5, wherein a shortest distance between the first annular wall (13) and the second annular wall (33) is G2; an average thickness of the second substrate (31) is T; and a ratio of G2 to T is 60% - 200%.

13. The button battery of any one of claims 1 to 5, wherein a shortest distance between the first annular wall (13) and the second substrate (31) is G3; an average thickness of the second substrate (31) is T; and a ratio of G3 to T is 340% - 560%.
